# EUROPÄISCHE PATENTANMELDUNG

(11) **EP 3 159 960 A1**
(43) Veröffentlichungstag der Anmeldung: **26.04.2017**
(21) Anmeldenummer: 15190398.6
(22) Anmeldetag: 19.10.2015
(51) Int. Cl.: H01M 10/20, H01M 10/44, H01M 10/6567, H01M 10/613, B08B 15/00, H01M 2/12, H01M 4/22, H01M 10/06

(54) **VORRICHTUNG ZUM KÜHLEN UND LADEN VON BATTERIEN AUF PALETTEN**

(71) Anmelder: Bäumler, Andreas Christian, 33397 Rietberg (DE)
(72) Erfinder: Bäumler, Andreas Christian, 33397 Rietberg (DE)
(74) Vertreter: Flötotto, Hubert

(57) **Zusammenfassung**

Die Erfindung betrifft eine Vorrichtung (1) zum Kühlen und Laden von Batterien (2) auf Paletten (3), umfassend wenigstens ein mit einem flüssigen Kühlmedium gefülltes Behältnis (4) in das die Palette (3) mit den Batterien (2) zur Kühlung und zur Ladung absetzbar ist, wobei über dem Behältnis (4) eine an einem Schienensystem (5) verfahrbare Transporteinrichtung (6) angeordnet ist, die die Palette (3) mit den Batterien (2) in das Behältnis (4) absenkt oder aus dem Behältnis (4) hebt. Gemäß der Erfindung verfügt die Transporteinrichtung (6) über eine zusätzliche Greifeinrichtung (8) mittels der auf die mit Batterien (2) bestückte Palette (3) für den Ladevorgang eine Haube (9) zur Absaugung der bei der Ladung entstehenden Gase aufsetzbar und von der Palette (3) abnehmbar ist.

## Beschreibung

### Technisches Umfeld

Die Erfindung betrifft eine Vorrichtung zum Kühlen und Laden von Batterien auf Paletten, umfassend wenigstens ein mit einem flüssigen Kühlmedium gefülltes Behältnis, in das die Palette mit den Batterien zur Kühlung und zur Ladung absetzbar ist, wobei über dem Behältnis eine an einem Schienensystem verfahrbare Transporteinrichtung angeordnet ist, die die Palette mit den Batterien in das Behältnis absenkt oder aus dem Behältnis hebt.

### Stand der Technik

Aus dem Stand der Technik ist es bekannt, dass zur Beladung von Batterien diese in sog. Tröge gesetzt werden, in denen eine Kühlflüssigkeit vorgehalten wird. Bei der Kühlflüssigkeit handelt es sich hierbei um Wasser, welches in den sog. Trögen in Umlauf gehalten wird, um auf diese Weise die zu ladenden Batterien während des Ladevorganges zu kühlen.

Die Batterien als solches werden hierbei auf Paletten vorgehalten, wobei bis zu zwölf Batterien oder mehr auf einer Palette bevorratet werden. Mit einer Transporteinrichtung werden die mit den Batterien beladenen Paletten in die Wassertröge eingesetzt, so dass die Batterien bis zu 85% der Batteriehöhe in dem Wasserbad stehen. Sind die Batterien auf den Paletten befüllt, werden die Paletten mit den Batterien mit der Transporteinrichtung aus dem Kühlbehältnis herausgehoben, um sie dann versandfertig zu verpacken.

Während des Ladevorganges der Batterien entweicht aus den Batteriezellen durch die Stopfenöffnungen oder durch Ventilöffnungen der Batterien ein explosives Gasgemisch. Das Gasgemisch entsteht durch die Zersetzung von Wasser der Elektrolyten in Sauerstoff und Wasserstoff, dem sogenannten Knallgas. Räume oder Hallen, in denen insbesondere eine derartige Beladestation eingesetzt wird, sind so zu belüften, dass das beim Laden entstehende Gasgemisch entweder durch natürliche Belüftung oder durch eine technisch ausgelegte Lüftung so verdünnt wird, dass die Wasserstoffkonzentration unterhalb der explosionsgefährdenden Schwelle von 4% liegt.

Eine derartige Belüftungseinrichtung gestaltet sich für Hallen, in denen eine Vielzahl von mit Paletten bestückten Batterien zur Ladung vorgehalten werden, oft als sehr problematisch, da sich insbesondere auch in den Hallen Nester von Restgasen bilden können, die nicht von der Belüftungseinrichtung oder von einer natürlichen Belüftung ausgespült werden können. Daher ergibt sich insbesondere das Problem, dass hohe Sicherheitsstandards in den Hallen vorgehalten werden müssen, die auch hinsichtlich der Elektrifizierung hohe Sicherheitstandards erfüllen müssen, damit es zu keiner Funkenbildung in den Hallen kommen kann. Eine derartige Vorhaltung von Sicherheitsmaßnahmen ist daher sehr aufwendig von der konstruktiven Seite her, was damit auch eine hohe Kostenintensität für eine absolut sichere Beladestation zur Folge hat.

### Aufgabe

Der Erfindung stellt sich somit das Problem, eine Vorrichtung zum Kühlen und Laden von Batterien auf Paletten derart weiter zu bilden, die eine Handhabung mit auf den Paletten befindlichen Batterien bei der Ladung zu vereinfachen, wobei insbesondere eine hohe Sicherheit für den Beladevorgang in Hallen oder Räumen für die Batterien auf den Paletten gegeben sein soll, unter Berücksichtigung einer günstigen Kostenstruktur für die Vorrichtung.

### Lösung

Erfindungsgemäß wird dieses Problem mit den Merkmalen des Anspruchs 1 gelöst. Vorteilhafte Ausgestaltungen der Erfindung ergeben sich aus den Unteransprüchen.

Die mit der Erfindung bestehenden Vorteile bestehen nun darin, dass aufgrund der Transporteinrichtung die Paletten mit Batterien einerseits mit der Transporteinrichtung handhabbar sind, wobei keine gesonderten Fahrzeuge oder das Herausheben von Hand mehr erforderlich ist, wobei andererseits mit der Transportvorrichtung auch die Hauben für eine sichere und effektive Absaugung handhabbar sind. Aufgrund der erfindungsgemäßen Ausbildung ist es nun möglich, mit der Transporteinrichtung neben dem Transport der Paletten, auf denen die Batterien gelagert sind, entsprechend auch eine Haube mit zu transportieren, die wahlweise entweder auf die Palette aufgesetzt werden kann für den Beladevorgang, oder aber es besteht die Möglichkeit, gezielt mit der Transporteinrichtung die einzelnen Hauben von den in den Kühlbecken gelagerten Paletten abzunehmen, um diese dann an einen Ort in der Halle zur Vorhaltung abzusetzen.

Wird also beispielsweise ein Kühlbecken vorbereitet, in dem entsprechend viele Paletten untergebracht sind und es soll zu einer Beladung der Batterien kommen, so können entsprechend die Paletten mit ihren Hauben in dem Kühlbecken abgesetzt werden, wobei dann während des Beladungsvorgangs die entstehenden Gase geziehlt durch die einzelnen Hauben gesammelt und abgezogen werden können. Aufgrund dieser Ausbildung wird in vorteilhafter Weise erreicht, dass die Hauben die geforderte erhöhte Sicherheit in den Räumen bereitstellen, ohne dass es einer zusätzlichen Raumbelüftung bedarf.

Gemäß der Erfindung wird hierzu vorgeschlagen, dass die Transporteinrichtung über eine zusätzliche Greifeinrichtung verfügt mittels der auf die mit Batterien bestückte Palette für den Ladevorgang eine Haube zur Absaugung der bei der Ladung entstehenden Gase aufsetzbar und die Haube wieder abnehmbar ist. Somit erhält die Transportvorrichtung zwei wesentliche Eigenschaften, die das gesamte System hier flexibel gestalten, eben dass einerseits die Paletten mit den Batterien entsprechend an Orten abgesetzt werden können, wobei parallel entsprechend auch die sog. Absaugung durch Bereitstellung einer Haube gezielt vorgenommen werden kann. Dabei können in Vorteilhafter weise sowohl Haube als auch die Palette mit den Batterien unabhängig voneinander transportiert werden.

Nach einer vorteilhaften Ausgestaltung der Erfindung besteht die Greifeinrichtung aus Greifarmen, die an der Transporteinrichtung an drehbar gelagerten Wellen vorgesehen ist. Die schwenkbar gelagerten Wellen sind jeweils an den Längsseiten der Transporteinrichtung vorgesehen. Um die Haube nun ergreifen zu können und diese in einem lösbaren und festen Zustand zu halten, greifen die an den Wellen befestigten Greifarme im angesetzten Zustand in an den Seitenwänden der Haube vorgesehe Nuten. Somit wird erreicht, dass auf einfache Weise die Greifarme seitlich neben der Haube einfahren können, wobei durch Verschwenken der Welle, an denen die Greifarme befestigt sind, diese dann in den Nuten an der Haube einschwenken.

In Weiterbildung der Erfindung sind die schwenkbar gelagerten Wellen an einer als Rahmen ausgebildeten Traverse der Transporteinrichtung absenkbar angeordnet. Die schwenkbar gelagerten Wellen sind hierbei jeweils endseitig über Endlos-Riemen-Antriebe vertikal an der Traverse verfahrbar angeordnet. Es versteht sich nun, dass, wenn beispielsweise die Transporteinrichtung mit ihrer Traverse über eine Haube fährt, die einzelnen Greifarme an der Traverse abgesenkt werden können, so dass sie in Deckungslage zur Haube kommen, wobei die Greifarme dann in Ausrichtung in die Nuten der Haube eingreifen, um diese dann über die Hebevorrichtung an der Traverse anzuheben, so dass dann die Transporteinrichtung entsprechend die Haube verfahren kann.

In Weiterbildung ist die Traverse an einem an einem Schienensystem vorgesehenen Laufwagen um 90° schwenkbar angeordnet. Der Laufwagen umfasst hierbei ebenfalls einen Rahmen an dessen Oberseite Laufrollen für das Schienensystem vorgesehen sind und wobei an der Unterseite ein motorisch angetriebener Drehkranz für das Verschwenken der Traverse angeordnet ist. Somit ergibt sich die Möglichkeit, dass das Transportsystem entsprechend quer zur Laufrichtung ausgerichtet werden kann, so dass entsprechend die Hauben, die quer zur Laufrichtung des Schienensystems ausgerichtet sind, aufgenommen werden können. Somit kann aber auch die Traverse an dem Laufwagen entsprechend horizontal verfahrbar angeordnet sein, so dass nebeneinander angeordnete Hauben oder Paletten entsprechend aus dem Kühlbecken gehoben und abgesetzt werden können.

Nach einer besonders vorteilhaften Ausgestaltung der Erfindung ist jeweils eine der Stirnseiten der Haube mit einer Ausformung versehen, zur Bildung eines Kanals, der mit einer Zentralabsaugung zusammenwirkt. Somit versteht es sich, wenn die Haube abgesenkt ist, entsprechend ein Stutzen der Absaugung in die Ausformung an der Haube einfährt, an dem ein Unterdruck anliegt, so dass die entstehenden Gase unterhalb der Haube zentral abgesaugt werden.

### Beschreibung der Zeichnungen

Ein Ausführungsbeispiel der Erfindung ist in den Zeichnungen rein schematisch dargestellt und wird nachfolgend näher beschrieben. Es zeigt
- Figur 1: eine perspektivische Darstellung der Vorrichtung und der Transporteinrichtung mit Hauben;
- Figur 2: eine weitere perspektivische Darstellung eines Behältnisses mit auf Paletten angeordneten Batterien mit und ohne Hauben;
- Figur 3: eine weitere perspektivische Darstellung der Vorrichtung und hier insbesondere der verfahrbaren Transporteinrichtung mit abgesenkten Hauben und
- Figur 4: eine weitere perspektivische Darstellung einer Detailansicht einer aufgesetzten Haube mit angeschlossenem Elektroladeanschluss.

### Ausführungsbeispiele

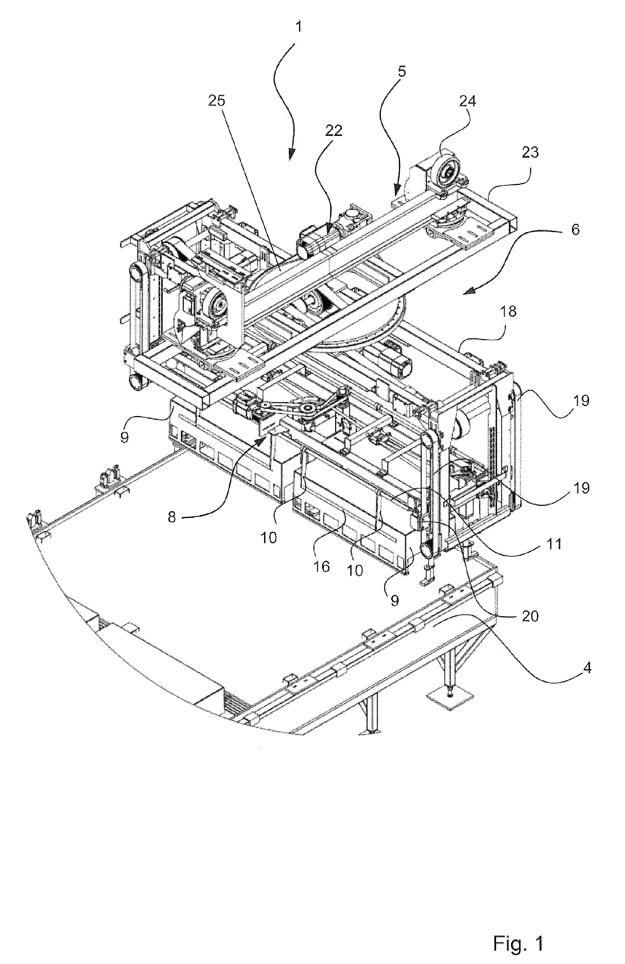

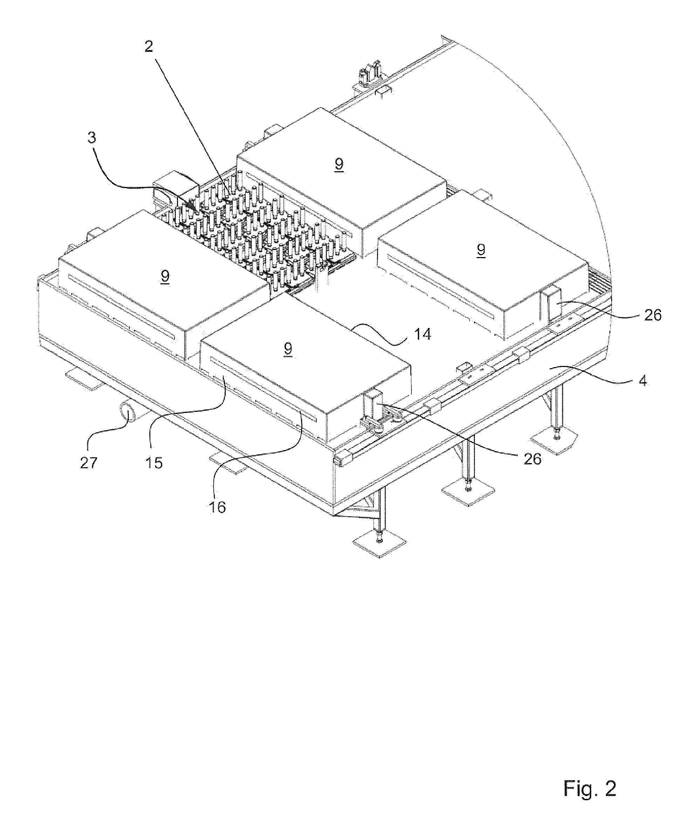

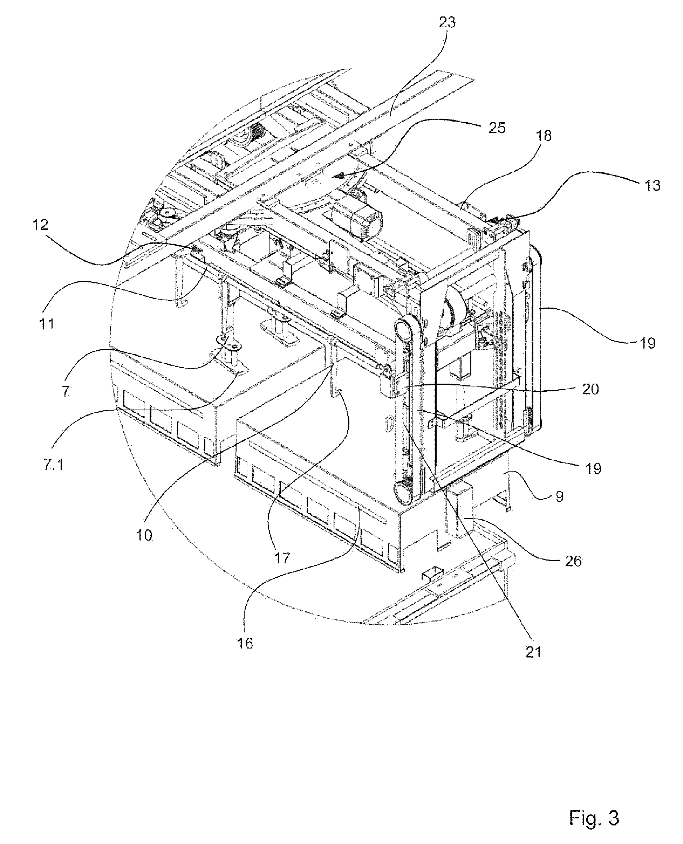

Die Figur 1 zeigt in der perspektivischen Darstellung eine Vorrichtung 1 zum Kühlen und Lagern von Batterien 2, wie diese in Ansicht der Figur 2 auf einer Palette 3 dargestellt sind, wobei die Batterien 2 auf der Paletten 3 bevorratet sind. Die Vorrichtung 1 umfasst hierbei wenigstens ein mit einem flüssigen Kühlmedium gefülltes Behältnis 4, in das die Palette 3 mit den Batterien 2 zur Kühlung und Ladung abgesetzt werden kann. Über dem Behältnis 4 ist eine an einem Schienensystem 5 verfahrbare Transporteinrichtung 6 angeordnet, die die Palette 3 mit den Batterien 2 in das Behältnis 4 absenkt oder aus dem Behältnis 4 hebt. Hierzu verfügt die Transporteinrichtung 6 einmal über verschwenkbare Heber 7, wie diese insbesondere in der Figur 3 dargestellt sind. Die Heber 7 können dabei zwischen die Paletten 3 einfahren, wobei durch Verdrehen der unteren Heberarme 7.1 um eine 90° Verschwenkung die Heberarme 7.1 in die Palette greifen, so dass die einzelne Palette 3 gehoben oder abgesenkt werden kann.

Die Transporteinrichtung 6 verfügt hierbei zusätzlich über eine Greifeinrichtung 8, mittels der auf die mit Batterien 2 bestückten Paletten 3 für den Ladevorgang eine Haube 9 zur Absaugung der bei der Ladung entstehenden Gase aufsetzbar und wieder abnehmbar ist, wie dies in der Zusammenschau sämtlicher Figuren 1 - 4 näher dargestellt ist. Wie insbesondere aus der Figur 1 und 3 zu erkennen ist, besteht die Greifeinrichtung 8 an der Transporteinrichtung 6 aus schwenkbar gelagerten Greifarmen 10, wie diese deutlicher in der Figur 3 gezeigt sind. Die Greifarme 10 sind hierbei an der Transporteinrichtung 6 an schwenkbar gelagerten Wellen 11 angeordnet. Wie weiter zu erkennen ist, sind die schwenkbar gelagerten Wellen 11 jeweils an den Längsseiten 12 und 13 der Transporteinrichtung 6 vorgesehen. In Zusammenschau der Figur 1 und der Figur 3, aber auch in Verbindung mit der Figur 2 und 3, ist erkennbar, dass die an den Wellen 11 befestigten Greifarme 10 im angesetztem Zustand in an den Seitenwänden 14 und 15 der Haube 9 vorgesehene Nuten 16 greifen. Es versteht sich nun, dass, wenn die Greifarme 10 über die Welle 11 leicht nach außen geschwenkt werden, die Transporteinrichtung 6 auf den Horizont der Nuten 16 abgesenkt werden kann, wobei dann durch ein Zurückschwenken der Wellen 11 die Greifarme 10 mit ihren horizontal verlaufenden Schenkeln 17 dann in die Nut 16 eingreifen, so dass dann die Haube 9 gehoben werden kann, um sie dann mit der Transporteinrichtung 6 zu verfahren.

Wie insbesondere in der Figur 1 und 3 zu erkennen ist, sind die schwenkbar gelagerten Wellen 11 an einer als Rahmen 18 ausgebildeten Traverse der Transporteinrichtung 6 absenkbar angeordnet. Die schwenkbar gelagerten Wellen 11 sind hierbei jeweils endseitig über Endlos-Riemen 19 an der Traverse 18 angeordnet. Diese Riementriebe 19 sind insbesondere in der Figur 3 näher zu erkennen, wobei nur ein Trum mit dem Wellenantrieb 20 für die Wellenaufhängung verbunden ist. In der Figur 3 ist insbesondere erkennbar, dass das Ende der Welle 11 an dem Riementrieb 19 befestigt ist, wobei selbst die Welle 11 mit dem Verschwenkmechanismus an einer Schiene 21 entlang des Endlosriementriebes 19 verfahrbar ist, so dass es zu keiner Verkantung beim Absenken oder beim Anheben der Greifarme 10 kommen kann.

Wie insbesondere zudem aus der Figur 1 zu erkennen ist, ist die Traverse 18 an einem an einem Schienensystem 5 vorgesehenen Laufwagen 22 schwenkbar gelagert. Somit ergibt sich, dass die Traverse 18 in Fahrtrichtung quer zum Oberrahmen des Laufwagens 22 verschwenken kann. Der Laufwagen 22 umfasst ebenfalls einen Rahmen 23, an dessen Oberseite Laufrollen 24 für das Schienensystem 5 vorgesehen sind und wobei an der Unterseite ein motorisch angetriebener Drehkranz 25 für den Traveserahmen 18 angeordnet ist. Es versteht sich nun, dass mit der erfindungsgemäßen Vorrichtung 1 entsprechend die Hauben 9 von den Paletten 3 abgehoben oder aufgesetzt werden kann, wobei diese dann mit der Vorrichtung 1, und hier mit der Transporteinrichtung 6 der Vorrichtung 1, entsprechend in ein Lager gefahren werden oder aber, wenn die Batterien 2 beladen werden sollen, diese dann auf die einzelne Palette 2 abgesetzt werden kann.

Wie bereits schon oben angeführt besteht auch die Möglichkeit, dass mit der Transporteinrichtung 6 sowohl die Palette 2 aus dem Behältnis 4 herausgeholt werden kann, wobei durch die unabhängige Verfahrbarkeit der Greifarme 10 an der Traverse 18 entsprechend auch die Hauben 9 mit aufgenommen werden können.

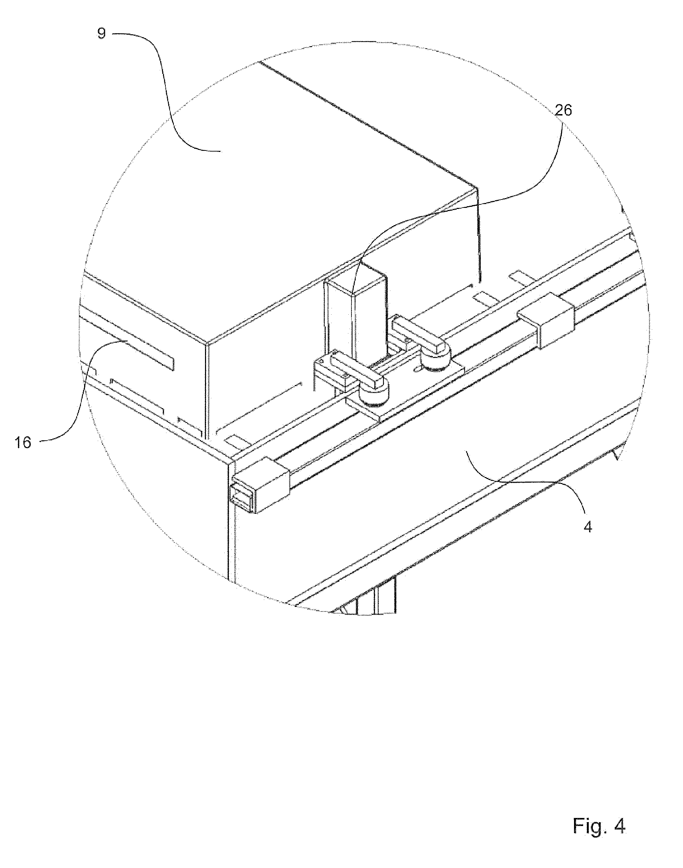

Nach einer besonders vorteilhaften Weiterbildung ist jeweils an einer der Stirnseiten der Hauben 9, dargestellt in der Detailansicht der Figur 4, eine Ausformung 26 vorgesehen, mit der ein Kanal an der Außenseite der Haube 9 gebildet wird. Der Kanal wirkt beim Aufsetzen der Haube 9 auf die Palette 3 mit einer nicht näher dargestellten Zentralabsaugung zusammen. Die Zentralabsaugung ist hier beispielsweise in der Figur 2 dargestellt, wo an der Unterseite des Behältnisses 4 ein Rohr 27 vorgesehen ist, über das dann die zentrale Absaugung vorgenommen werden kann. Um den Absaugvorgang möglichst dicht vorzunehmen, fährt beim Absenken der Haube 9 ein Stutzen in den Kanal der Ausformung 26 ein, so dass dann gezielt das emittierende Gas aus dem Hohlraum der Haube 9 abgezogen werden kann.

### Bezugszeichenliste

- 01: Vorrichtung
- 02: Batterien
- 03: Paletten
- 04: Behältnis
- 05: Schienensystem
- 06: Transporteinrichtung
- 07: Heber
7.1 Heberarme
- 08: Greifeinrichtung
- 09: Haube
- 10: Greifarme
- 11: Wellen
- 12: Längsseite
- 13: Längsseite
- 14: Seitenwand
- 15: Seitenwand
- 16: Nuten
- 17: Schenkel
- 18: Rahmen / Traverse
- 19: Endlosriemenantrieb
- 20: Wellenantrieb
- 21: Schiene
- 22: Laufwagen
- 23: Rahmen Laufwagen
- 24: Laufrollen
- 25: Drehkranz
- 26: Ausformung
- 27: Rohr

## Patentansprüche

1. Vorrichtung (1) zum Kühlen und Laden von Batterien (2) auf Paletten (3), umfassend wenigstens ein mit einem flüssigen Kühlmedium gefülltes Behältnis (4) in das die Palette (3) mit den Batterien (2) zur Kühlung und zur Ladung absetzbar ist, wobei über dem Behältnis (4) eine an einem Schienensystem (5) verfahrbare Transporteinrichtung (6) angeordnet ist, die die Palette (3) mit den Batterien (2) in das Behältnis (4) absenkt oder aus dem Behältnis (4) hebt,
**dadurch gekennzeichnet,**
**dass** die Transporteinrichtung (6) über eine zusätzliche Greifeinrichtung (8) verfügt, mittels der auf die mit Batterien (2) bestückte Palette (3) für den Ladevorgang eine Haube (9) zur Absaugung der bei der Ladung entstehenden Gase aufsetzbar und von der Palette (3) abnehmbar ist.

2. Vorrichtung nach Anspruch 1,
**dadurch gekennzeichnet,**
**dass** die Greifeinrichtung (8) an der Transporteinrichtung (6) aus schwenkbar gelagerten Greifarmen (10) besteht.

3. Vorrichtung nach Anspruch 1 und 2,
**dadurch gekennzeichnet,**
**dass** die Greifarme (10) an der Transporteinrichtung (6) an schwenkbar gelagerten Wellen (11) angeordnet sind.

4. Vorrichtung nach den Ansprüchen 1 bis 3,
**dadurch gekennzeichnet,**
**dass** die schwenkbar gelagerten Wellen (11) jeweils an den Längsseiten (12, 13) der Transporteinrichtung (6) vorgesehen sind.

5. Vorrichtung nach den Ansprüchen 1 bis 4,
**dadurch gekennzeichnet,**
**dass** die an den Wellen (11) befestigten Greifarme (10) im angesetzten Zustand in an den Seitenwänden (14) und (14) der Haube (9) vorgesehene Nuten (16) greifen.

6. Vorrichtung nach den Ansprüchen 1 bis 5,
**dadurch gekennzeichnet,**
**dass** die schwenkbar gelagerten Wellen (11) an einer als Rahmen ausgebildeten Traverse (18) der Transporteinrichtung (6) absenkbar angeordnet sind.

7. Vorrichtung nach den Ansprüchen 1 bis 6,
**dadurch gekennzeichnet,**
**dass** die schwenkbar gelagerten Wellen (11) jeweils endseitig über Endlosriemenantriebe (19) verfahrbar an der Traverse (18) angeordnet sind.

8. Vorrichtung nach den Ansprüchen 1 bis 7,
**dadurch gekennzeichnet,**
**dass** die Traverse (18) an einem an einem Schienensystem (5) vorgesehenen Laufwagen (22) schwenkbar angeordnet ist.

9. Vorrichtung nach den Ansprüchen 1 bis 8,
**dadurch gekennzeichnet,**
**dass** der Laufwagen (22) ebenfalls einen Rahmen (23) umfasst an dessen Oberseite Laufrollen (24) für das Schienesystem (5) und an dessen Unterseite ein motorisch angetriebener Drehkranz (25) für den Traverserahmen (18) angeordnet ist.

10. Vorrichtung nach einem oder mehreren der vorhergehenden Ansprüche 1 bis 9,
**dadurch gekennzeichnet,**
**dass** jeweils an einer der Stirnseiten der Hauben (9) eine Ausformung (26) vorgesehen ist, zur Bildung eines Kanals der mit einer Zentralabsaugung zusammenwirkt.
